# EUROPÄISCHE PATENTSCHRIFT

(11) **EP 1 002 979 B1**
(45) Veröffentlichungstag und Bekanntmachung des Hinweises auf die Patenterteilung: **17.03.2004**
(21) Anmeldenummer: 99120148.4
(22) Anmeldetag: 08.10.1999
(51) Int. Cl.: F16L 11/04, C08L 77/00, C08L 77/12, C08L 75/04, C08L 67/02, C08L 53/02, C08L 51/06, C08L 51/00, C08L 45/00, C08L 23/02, C08L 77/02, C08L 23/16, C08L 77/06

(54) **Flexibles Rohr**
Flexible tube
Tube flexible

(30) Priorität: 20.11.1998 DE 19853545
(43) Veröffentlichungstag der Anmeldung: 24.05.2000
(73) Patentinhaber: Degussa AG, 40474 Düsseldorf (DE)
(72) Erfinder: Beuth, Reinhard, 45772 Marl (DE); Farges, Olivier, 45768 Marl (DE); Kaiser, Harald, Dr., 45772 Marl (DE); Schlobohm, Michael, Dr., 45721 Haltern (DE)

(56) Entgegenhaltungen:
- EP-A- 0 234 819
- EP-A- 0 716 126
- WO-A-95/35347
- WO-A-98/28363

## Beschreibung

Gegenstand der Erfindung ist ein flexibles Rohr mit hoher Maßhaltigkeit, gutem Rückstellverhalten und guter Medienbeständigkeit, dessen Innenbereich aus einem Werkstoff mit nur geringen extrahierbaren Anteilen besteht. Der Begriff "Rohr" kann hier und im folgenden auch "Schlauch" bedeuten.

Für viele Anwendungen, beispielsweise im Kraftfahrzeugsektor, wird bei Rohren eine hohe Flexibilität verlangt. Exemplarisch genannt seien hier Rohre für Scheibenwaschanlagen, die häufig aus weichgemachtern PVC hergestellt werden (G. Walter, Kunststoffe und Elastomere in Kraftfahrzeugen, Verlag W. Kohlhammer, Stuttgart 1985, Seite 187 ff.). Während längerer Gebrauchsdauer verliert dieser Werkstoff jedoch Weichmacher durch Extraktion bzw. Ausdunsten, wird dadurch unflexibel, versprödet und neigt zu Spannungsrissen. Zudem ist dieser Werkstoff nicht ausreichend beständig gegenüber Fetten, Ölen und Kraftstoffen; er weist überdies den Nachteil auf, daß die Anbindungsfähigkeit der daraus hergestellten Rohre an die anderen Systemkomponenten unbefriedigend ist.

Die für derartige Anwendungen geforderte Eigenschaftskombination von hoher Flexibilität und Knickbeständigkeit, guter Maßhaltigkeit, guten Rückstellverhaltens, guter Medienbeständigkeit (insbesondere gegenüber Fetten, Ölen und Kraftstoffen) sowie guter Anbindungsfähigkeit an die anderen Systemkomponenten wurde bislang am ehesten mit Polyetherblockamiden erhalten. Allerdings stellte sich in der Praxis immer wieder heraus, daß in derartigen Rohren gefördertes wäßrig-alkoholisches Medium Bestandteile aus dem Rohrwerkstoff extrahiert; die ausgelösten Bestandteile führen dann zu Düsenverstopfungen oder zu Belägen bzw. optischen Mängeln nach Verdunsten der Waschflüssigkeit auf den benetzten Oberflächen.

Die EP-A-0 234 819 beschreibt Formmassen aus Polyamid und einem Ethylencopolymer, die unter anderem zur Herstellung von Rohren verwendet werden können.

In der EP-A-0 716 126 werden Formmassen beschrieben, die ebenfalls zur Herstellung von Rohren verwendet werden können und Polyamid, ein Ethylen-Terpolymer und ein Ethylen-Copolymer enthalten.

Die WO 95/35 345 beschreibt Zusammensetzungen aus Polyamid und Polyethylen zur Verwendung in Rohren.

Die Aufgabe der vorliegenden Erfindung bestand darin, flexible Rohre als Leitung für wäßrige, wäßrig-alkoholische oder rein alkoholische Flüssigkeiten aus einem Werkstoff bereitzustellen, der zwar die obengenannten vorteilhaften Eigenschaften polyamidbasierender Formmassen besitzt, jedoch einen deutlich verringerten Anteil an extrahierbaren Bestandteilen aufweist.

Diese Aufgabe wird durch eine Rohrleitung gelöst, ausgewählt aus der Gruppe Leitung für Scheibenwaschanlagen und Leitung für Scheinwerferwaschsysteme, wobei die Rohrleitung zumindest im Innenbereich der Wandung aus einer Formmasse besteht, die im wesentlichen folgende Bestandteile enthält:
I. 40 bis 80 Gew.-Teile, bevorzugt 40 bis 70 Gew.-Teile eines Polyamids und
II. 60 bis 20 Gew.-Teile, bevorzugt 60 bis 30 Gew.-Teile eines elastischen Polymeren, das nachfolgend näher beschrieben ist,
wobei sich die Gew.-Teile von I. und II. zu 100 addieren und wobei die Formmasse maximal 2 Gew.-% durch Ethanol extrahierbare Anteile enthält.

In einer bevorzugten Ausführungsform enthält das elastische Polymere funktionelle Gruppen, die eine Anbindung an das Polyamid ermöglichen.

In einer weiteren bevorzugten Ausführungsform enthält die Formmasse maximal 1,6 Gew.-%, besonders bevorzugt maximal 1,4 Gew.-% und ganz besonders bevorzugt maximal 1,2 Gew.-% extrahierbare Anteile, gemessen nach der weiter unten beschriebenen Methode.

Gegenstand der Erfindung sind auch die Verwendung einer Rohrleitung, die zumindest im Innenbereich der Wandung aus der oben angegebenen Formmasse besteht, zum Durchleiten wässriger, wässrig-alkoholischer oder rein alkoholischer Flüssigkeiten sowie die Verwendung der oben angegebenen Formmasse zur Herstellung einer Leitung für Scheibenwaschanlagen oder einer Leitung für Scheinwerferwaschsysteme.

Die Erfindung soll im folgenden näher erläutert werden.

Polyamide im Sinne dieser Erfindung sind hochmolekulare Verbindungen, die in ihrer Hauptkette -CO-NH-Bindungen aufweisen. Sie werden in der Regel aus Diaminen und Dicarbonsäuren oder aus Aminocarbonsäuren durch Polykondensation oder aus Lactamen durch Polymerisation gewonnen. Es kommen alle Polyamide infrage, die durch Erhitzen geschmolzen werden können. Beispiele für geeignete Polyamide sind PA 46, PA 6, PA 66, PA 610, PA 1010, PA612, PA 1012, PA 11, PA 12, PA 1212 sowie amorphe Copolyamide wie PA 6,3-T. Es können auch Blends verschiedener Polyamide sowie entsprechende Copolyamide verwendet werden. Derartige Polyamide, Blends, Copolyamide sowie geeignete Herstellungsverfahren sind Stand der Technik.

Das verwendete elastische Polymere wird durch Polymerisation von Verbindungen hergestellt, die eine olefinische Doppelbindung oder zwei miteinander konjugierte olefinische Doppelbindungen besitzen. Elastische Polymere, die durch Polykondensation hergestellt werden, wie z. B. Polyetheresteramide, Polyetherester oder Polyurethanelastomere, können in untergeordneten Mengen jedoch zusätzlich enthalten sein, sofern dadurch der extrahierbare Anteil im oben angegebenen Bereich bleibt.

Das erfindungsgemäß verwendete elastische Polymere wird aus folgenden Verbindungsklassen ausgewählt.
a) Ethylen/C₃- bis C₁₂-α-Olefin-Copolymere mit 20 bis 96, bevorzugt 25 bis 85 Gew.-% Ethylen. Als C₃- bis C₁₂-α-Olefin wird beispielsweise Propen, 1-Buten, 1-Penten, 1-Hexen, 1-Octen, 1-Decen oder 1-Dodecen eingesetzt. Typische Beispiele hierfür sind Ethylen-Propylen-Kautschuk sowie LLDPE.
b) Ethylen/C₃- bis C₁₂-α-Olefin/unkonjugiertes Dien-Terpolymere mit 20 bis 85, bevorzugt 25 bis 75 Gew.-% Ethylen und bis maximal etwa 10 Gew.-% eines unkonjugierten Diens wie Bicyclo(2.2.1)heptadien, Hexadien-1.4, Dicyclopentadien oder insbesondere 5-Ethylidennorbornen. Als C₃- bis C₁₂-α-Olefin sind die gleichen Verbindungen geeignet, wie sie oben unter a) beschrieben sind. Die Herstellung dieser Terpolymere sowie der unter a) beschriebenen Copolymere mit Hilfe eines Ziegler-Natta-Katalysators ist Stand der Technik.
c) Ethylen/Acrylat-Copolymere mit
   - 50 bis 94 Gew.-% Ethylen,
   - 6 bis 50 Gew.-% Acrylat der Formel 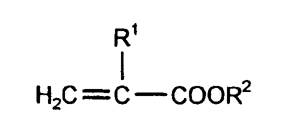 mit
      - R¹ =: H oder C₁- bis C₁₂-Alkyl, beispielsweise Methyl, Ethyl, n-Propyl, n-Butyl, i-Butyl, sec.-Butyl, n-Pentyl, n-Hexyl und
      - R² =: C₁- bis C₁₂-Alkyl, wie unter R¹ beschrieben, sowie beispielsweise Ethylhexyl, oder eine Alkylgruppe, die eine Epoxidgruppe trägt, wie z. B. ein Glycidylrest,
   - 0 bis 44 Gew.-% andere Comonomere, wie z. B. ein C₃- bis C₁₂-α-Olefin, wie es unter a) beschrieben ist, Styrol, eine ungesättigte Monooder Dicarbonsäure, wie z. B. Acrylsäure, Methacrylsäure, Maleinsäure, Maleinsäuremonobutylester oder Itaconsäure, ein ungesättigtes Dicarbonsäureanhydrid, wie z. B. Maleinsäureanhydrid oder Itaconsäureanhydrid, ein ungesättigtes Oxazolin, wie z. B. Vinyloxazolin oder Isopropenyloxazolin, ferner ein ungesättigtes Silan, wie z. B. Vinyltrimethoxysilan, Vinyl-tris(2-methoxy-ethoxy)silan, 3-Methacryloxypropyltrimethoxysilan oder 3-Methacryloxypropyltriethoxysilan. Die Herstellung derartiger Ethylen/Acrylat-Copolymerer durch radikalische Polymerisation ist Stand der Technik.
d) Styrol-Ethylen/Buten-Styrol-Blockcopolymere (SEBS), die durch Hydrierung von Styrol-Butadien-Styrol-Blockcopolymeren erhältlich sind.
e) Polyalkenylene, die durch ringöffnende bzw. ringerweiternde Polymerisation von Cycloalkenen hergestellt werden können [siehe K. J. Ivin, T. Saegusa, "Ring-opening Polymerisation", Vol. 1, Elsevier Appl. Sci. Publishers, London, insbesondere Seiten 121 bis 183 (1984)]. Hiervon werden Polyoctenylene bevorzugt (vgl. A. Dräxler, Kautschuk + Gummi, Kunststoff 1981, Seiten 185 bis 190).
f) LPDE (Hochdruck-Polyethylen)

Im Rahmen der Erfindung können auch Mischungen verschiedener elastischer Polymere verwendet werden, beispielsweise Mischungen eines oder mehrerer der unter a) bis f) beschriebenen Polymere mit Polyoctenylen.

Wie die obigen Ausführungen zeigen, besitzt das elastische Polymere mindestens die Elastizität eines LLDPE mit 96 Gew.-% Ethylen und ist in diesem Fall ein weicher Thermoplast. In den meisten Fällen jedoch besitzt es die Charakteristiken eines Elastomers.

Die im elastischen Polymeren bevorzugt enthaltenen funktionellen Gruppen - können entweder durch ungesättigte Monomere eingebracht werden, die in die Hauptkette einpolymerisiert sind, wie es beim Polymeren unter c) beschrieben ist, oder sie werden durch ungesättigte Monomere eingebracht, die auf das Polymer thermisch oder radikalisch aufgepfropft werden. Als funktionelle Gruppen, die eine Anbindung an das Polyamid ermöglichen, eignen sich insbesondere Carbonsäuregruppen, Säureanhydridgruppen, Imidgruppen, Epoxidgruppen, Oxazolingruppen oder Trialkoxysilangruppen. Das Aufpfropfen von ungesättigten funktionellen Verbindungen auf Polymere ist Stand der Technik; im. Handel ist eine Vielzahl entsprechender Produkte erhältlich.

Neben den Bestandteilen unter I. und II. kann die Formmasse noch kleinere Mengen von Zusatzstoffen enthalten, die zum Einstellen bestimmter Eigenschaften benötigt werden. Beispiele hierfür sind Pigmente bzw. Füllstoffe wie Ruß, Titandioxid, Zinksulfid, Silikate oder Carbonate, Verarbeitungshilfsmittel wie Wachse, Zinkstearat oder Calciumstearat, Flammschutzmittel wie Magnesiumhydroxid, Aluminiumhydroxid oder Melamincyanurat, Kohlenstoffasern, Graphitfibrillen, Antioxidantien sowie UV-Stabilisatoren. Es ist in jedem Fall darauf zu achten, daß die Zusätze möglichst wenig zum extrahierbaren Anteil beitragen.

Der Gehalt an extrahierbaren Anteilen wird durch 8stündige Extraktion von Granulat mit heißem 100prozentigen Ethanol unter Rückflußbedingungen bestimmt.

Die erfindungsgemäßen Rohre sind bevorzugt einschichtig ausgeformt, d. h. sie bestehen über den gesamten Querschnitt hinweg aus der anspruchsgemäßen Formmasse. Sie können in diesem Fall besonders einfach durch Extrusion hergestellt werden. Für besondere Anwendungszwecke kann es jedoch zweckmäßig sein, sie zwei- oder mehrschichtig auszubilden, wobei die innerste Schicht aus der anspruchsgemäßen Formmasse besteht, wobei sich nach außen hin eine bzw. mehrere Schichten aus anderen Werkstoffen anschließen, beispielsweise aus anderweitig schlagzäh ausgerüsteten PolyamidFormmassen, Polyetheresteramid oder Nitrilkautschuk. Wichtig ist nur, daß die innerste Schicht, die mit dem zu transportierenden Medium in Kontakt gerät, aus der anspruchsgemäßen Formmasse besteht. Mehrschichtige Rohre werden auf bekannte Weise durch Coextrusion hergestellt.

Bedingt durch den Einsatzzweck liegt der Zug-E-Modul der Formmasse, der hier als Maß für die Flexibilität dient, üblicherweise im Bereich zwischen 200 und 950 N/mm², gemessen nach DIN EN ISO 527/1A.

Zusätzliche Flexibilität kann erreicht werden, wenn das Rohr entweder in Teilbereichen oder auch komplett gewellt ist. Die Herstellung von Wellrehren ist Stand der Technik.

Die erfindungsgemäßen Rohre werden dort eingesetzt, wo wäßrige, wäßrig-alkoholische, rein alkoholische oder vergleichbare Flüssigkeiten gefördert werden, die auf Polyamide bzw. Polyetheresteramide extrahierend wirken. Beispiele hierfür sind Leitungen für Scheibenwaschanlagen von Kraftfahrzeugen sowie Leitungen für Scheinwerferwaschsysteme. Neben dem verringerten Gehalt an extrahierbaren Bestandteilen weisen sie darüber hinaus auch den Vorteil einer erheblich verbesserten Tieftemperaturschlagzähigkeit sowie hoher Flexibilität auf.

Die Erfindung soll im folgenden beispielhaft erläutert werden.

### Vergleichsbeispiel 1

Aus einer Formmasse der folgenden Zusammensetzung
- 99 Gew.-% Polyetheresteramid, hergestellt aus 76,3 Gew.-Teilen Laurinlactam, 18,8 Gew.-Teilen Polytetramethylenglykol und 4,2 Gew.-Teilen Dodecandisäure,
- 0,5 Gew.-% Ruß sowie
- 0,5 Gew.-% eines Stabilisators (IRGANOX® 245)
wurden 5 mm x 1 mm-Rohre (Wanddicke 1 mm; lichte Weite 5 mm) durch Extrusion hergestellt.

Sowohl das Ausgangsgranulat als auch das kleingeschnittene Rohr wurden anschließend in einem Extraktor der Fa. TECATOR, Modell Soxtec HTG auf folgende Weise extrahiert:

Ca. 2 g Granulat bzw. Rohr wurden auf einer Analysenwaage auf 0,001 g genau gewogen und verlustfrei in eine Extraktionshülse gegeben. 50 ml Ethanol wurden zusammen mit einem Siedesteinchen in die Vorlage gegeben. Das Granulat bzw. Rohr wurde nun bei 160 °C Thermostatvorlauftemperatur zunächst 7,5 Stunden bei "Kochstufe" und anschließend 30 Minuten bei "Auswaschstufe" extrahiert. Danach ließ man das Granulat bzw. Rohr abkühlen, stellte die Extraktionshülse in ein Becherglas und trocknete 16 Stunden im Vakuumtrockenschrank bei 130 °C. Nach der Trocknung wurde das Becherglas samt Inhalt in einen Exsikkator gebracht und ca. 3 Stunden auf Raumtemperatur abgekühlt.

Zur Ermittlung des Gewichtsverlustes wurde nun das extrahierte Granulat bzw. Rohr ohne Hülsen zurückgewogen. Der Gewichtsverlust betrug anhand von Doppelbestimmungen beim Granulat 2,4 Gew.-% und beim Rohr 2,5 Gew.-%.

Die Rohre wurden bei Kraftfahrzeugen in die Scheibenwaschanlage eingebaut; danach wurden die Scheibenwaschbehälter mit einem Ethanol/Wasser-Gemisch im Verhältnis 1 : 1 gefüllt. Diese Flüssigkeit löste die extrahierbaren Bestandteile der verlegten Rohre aus; die ausgelösten Anteile führten dann, besonders nach längerer Standzeit, zu Düsenverstopfungen.

### Beispiel 1

Durch Schmelzemischen der folgenden Komponenten wurde eine Formmasse hergestellt:
- 50: Gew.-Teile Polyamid 12, ηᵣₑₗ = 1,9
- 50: Gew.-Teile EXXELOR® VA 1801 (Ethylen/Propylen-Kautschuk, zusammengesetzt zu ca. 2/3 aus Ethylen und zu ca. 1/3 aus Propen, zusätzlich mit ca. 1 Gew.-% Maleinsäureanhydrid funktionalisiert)
- 0,5: Gew.-Teile Ruß
- 0,5: Gew.-Teile Stabilisator IRGANOX® 245

Die Extraktion des Granulats ergab einen Gewichtsverlust von 1,4 %, entsprechend 1,4 Gew.-% extrahierbaren Anteilen.

Aus der Formmasse wurden 5 mm x 1 mm-Rohre durch Extrusion hergestellt.

Die Rohre wurden bei Kraftfahrzeugen in die Scheibenwaschanlage eingebaut; danach wurden die Scheibenwaschbehälter mit einem Ethanol/Wasser-Gemisch im Verhältnis 1 : 1 gefüllt. Es wurden keine Düsenverstopfungen festgestellt.

### Beispiel 2

Durch Schmelzemischen der folgenden Komponenten wurde eine Formmasse hergestellt:
- 60: Gew.-Teile Polyamid 12, ηᵣₑₗ = 1,9
- 40: Gew.-Teile EXXELOR® VA 1801
- 0,5: Gew.-Teile Ruß
- 0,5: Gew.-Teile.IRGANOX® 245

Die Extraktion des Granulats ergab 1,2 Gew.-% extrahierbare Anteile.

Aus der Formmasse wurden 5 mm x 1 mm-Rohre durch Extrusion hergestellt.

Die Rohre wurden bei Kraftfahrzeugen in die Scheibenwaschanlage eingebaut; danach wurden die Scheibenwaschbehälter mit einem Ethanol/Wasser-Gemisch im Verhältnis 1 : 1 gefüllt. Es wurden keine Düsenverstopfungen festgestellt.

### Beispiel 3

Durch Schmelzemischen der folgenden Komponenten wurde eine Formmasse hergestellt:
- 64: Gew.-Teile Polyamid 12, ηᵣₑₗ = 1,9
- 36: Gew.-Teile EXXELOR® VA 1801
- 0,5: Gew.-Teile Ruß
- 0,5: Gew.-Teile IRGANOX® 245

Die Extraktion des Granulats ergab 1,0 Gew.-% extrahierbare Anteile.

Aus der Formmasse wurden 5 mm x 1 mm-Rohre durch Extrusion hergestellt.

Wie im Beispiel 2 wurden auch hier keine Düsenverstopfungen festgestellt.

### Beispiel 4:

Durch Schmelzemischen der folgenden Komponenten wurde eine Formmasse hergestellt:
- 50: Gew.-Teile Polyamid 12, ηᵣₑₗ = 1,9
- 50: Gew.-Teile KRATON® FG 1901 X (maleinsäureanhydrid-funktionalisiertes SEBS)
- 0,5: Gew.-Teile Ruß
- 0,5: Gew.-Teile IRGANOX® 245

Die Extraktion des Granulats ergab 1,5 Gew.-% extrahierbare Anteile.

Aus der Formmasse wurden 5 mm x 1 mm-Rohre durch Extrusion hergestellt.

Wie im Beispiel 2 wurden auch hier keine Düsenverstopfungen festgestellt.

### Beispiel 5:

Durch Schmelzemischen der folgenden Komponenten wurde eine Formmasse hergestellt:
- 50: Gew.-Teile Polyamid 12, ηᵣₑₗ = 1,9
- 50: Gew.-Teile BYNEL® CXA 41 E 557 (LLPDE, laut Analyse aus 95,2 Gew.-% Ethen, 3,7 Gew.-% Buten und 1,1 Gew.-% Hexen; zusätzlich mit ca. 1 Gew.-% Maleinsäureanhydrid funktionalisiert)
- 0,5: Gew.-Teile Ruß
- 0,5: Gew.-Teile IRGANOX® 245

Die Extraktion des Granulats ergab 0,8 Gew.-% extrahierbare Anteile.

Aus der Formmasse wurden 5 mm x 1 mm-Rohre durch Extrusion hergestellt.

Wie im Beispiel 2 wurden auch hier keine Düsenverstopfungen festgestellt.

## Patentansprüche

1. Rohrleitung, ausgewählt aus der Gruppe Leitung für Scheibenwaschanlagen und Leitung für Scheinwerferwaschsysteme,
wobei die Rohrleitung zumindest im Innenbereich der Wandung aus einer Formmasse besteht, die im wesentlichen folgende Bestandteile enthält:
I. 40 bis 80 Gew.-Teile eines Polyamids sowie
II. 60 bis 20 Gew.-Teile eines elastischen Polymeren, das ausgewählt ist aus der Gruppe
- Ethylen/C₃- bis C₁₂-α-Olefin-Copolymeren mit 20 bis 96 Gew.-% Ethylen;
- Ethylen/C₃- bis C₁₂-α-Olefin/unkonjugiertes Dien-Terpolymeren mit 20 bis 85 Gew.-% Ethylen und maximal etwa 10 Gew.-% eines unkonjugierten Diens;
- Ethylen/Acrylat-Copolymeren mit 50 bis 94 Gew.-% Ethylen, 6 bis 50 Gew.-% eines Acrylats der Formel 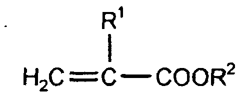 mit
R¹ = H oder C₁- bis C₁₂-Alkyl und
R² = C₁- bis C₁₂-Alkyl oder eine Alkylgruppe, die eine Epoxidgruppe trägt,
sowie 0 bis 44 Gew.-% anderer Comonomerer;
- Styrol-Ethylen/Buten-Styrol-Blockcopolymeren (SEBS),
- Polyalkenylenen und
- LDPE (Hochdruck-Polyethylen);
wobei sich die Gew.-Teile von I. und II. zu 100 addieren und wobei die Formmasse maximal 2 Gew.-% durch Ethanol extrahierbare Anteile enthält.

2. Rohrleitung gemäß Anspruch 1,
**dadurch gekennzeichnet,**
**dass** das elastische Polymere funktionelle Gruppen enthält, die eine Anbindung an das Polyamid ermöglichen.

3. Rohrleitung gemäß einem der Ansprüche 1 und 2,
**dadurch gekennzeichnet,**
**dass** das Polyamid ein PA 612 ist.

4. Verwendung einer Rohrleitung, die zumindest im Innenbereich der Wandung aus einer Formmasse besteht, die im wesentlichen folgende Bestandteile enthält:
I. 40 bis 80 Gew.-Teile eines Polyamids sowie
II. 60 bis 20 Gew.-Teile eines elastischen Polymeren, das ausgewählt ist aus der Gruppe
- Ethylen/C₃- bis C₁₂-α-Olefin-Copolymeren mit 20 bis 96 Gew.-% Ethylen;
- Ethylen/C₃- bis C₁₂-α-Olefin/unkonjugiertes Dien-Terpolymeren mit 20 bis 85 Gew.-% Ethylen und maximal etwa 10 Gew.-% eines unkonjugierten Diens;
- Ethylen/Acrylat-Copolymeren mit 50 bis 94 Gew.-% Ethylen, 6 bis 50 Gew.-% eines Acrylats der Formel 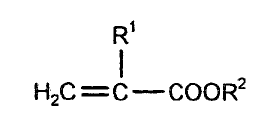 mit
R¹ = H oder C₁- bis C₁₂-Alkyl und
R² = C₁- bis C₁₂-Alkyl oder eine Alkylgruppe, die eine Epoxidgruppe trägt,
sowie 0 bis 44 Gew.-% anderer Comonomerer;
- Styrol-Ethylen/Buten-Styrol-Blockcopolymeren (SEBS),
- Polyalkenylenen und
- LDPE (Hochdruck-Polyethylen);
wobei sich die Gew.-Teile von I. und II. zu 100 addieren und wobei die Formmasse maximal 2 Gew.-% durch Ethanol extrahierbare Anteile enthält, zum Durchleiten wässriger, wässrig-alkoholischer oder rein alkoholischer Flüssigkeiten.

5. Verwendung gemäß Anspruch 4,
**dadurch gekennzeichnet,**
**dass** das elastische Polymere funtionelle Gruppen enthält, die eine Anbindung an das Polyamid ermöglichen.

6. Verwendung gemäß einem der Ansprüche 4 und 5,
**dadurch gekennzeichnet,**
**dass** das Polyamid ein PA 612 ist..

7. Verwendung einer Formmasse, die im wesentlichen folgende Bestandteile enthält:
I. 40 bis 80 Gew.-Teile eines Polyamids und
II. 60 bis 20 Gew.-Teile eines elastischen Polymeren, das ausgewählt ist aus der Gruppe
- Ethylen/C₃- bis C₁₂-α-Olefin-Copolymeren mit 20 bis 96 Gew.-% Ethylen;
- Ethylen/C₃- bis C₁₂-α-Olefin/unkonjugiertes Dien-Terpolymeren mit 20 bis 85 Gew.-% Ethylen und maximal etwa 10 Gew.-% eines unkonjugierten Diens;
- Ethylen/Acrylat-Copolymeren mit 50 bis 94 Gew.-% Ethylen, 6 bis 50 Gew.-% eines Acrylats der Formel 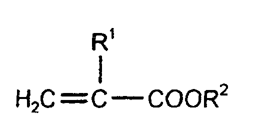 mit
R¹ = H oder C₁- bis C₁₂-Alkyl und
R² = C₁- bis C₁₂-Alkyl oder eine Alkylgruppe, die eine Epoxidgruppe trägt,
sowie 0 bis 44 Gew.-% anderer Comonomerer;
- Styrol-Ethylen/Buten-Styrol-Blockcopolymeren (SEBS),
- Polyalkenylenen und
- LDPE (Hochdruck-Polyethylen);
wobei sich die Gew.-Teile von I. und II. zu 100 addieren und wobei die Formmasse maximal 2 Gew.-% durch Ethanol extrahierbare Anteile enthält, zur Herstellung einer Leitung für Scheibenwaschanlagen oder einer Leitung für Scheinwerferwaschsysteme.

8. Verwendung gemäß Anspruch 7,
**dadurch gekennzeichnet,**
**dass** die Formmasse im wesentlichen
I. 40 bis 70 Gew.-Teile eines Polyamids und
II. 60 bis 30 Gew.-Teile eines elastischen Polymeren
enthält.

9. Verwendung gemäß einem der Ansprüche 7 und 8,
**dadurch gekennzeichnet,**
**dass** das elastische Polymere funktionelle Gruppen enthält, die eine Anbindung an das Polyamid ermöglichen.

10. Verwendung gemäß einem der Ansprüche 7 bis 9,
**dadurch gekennzeichnet,**
**dass** die Rohrleitung einschichtig aufgebaut ist.

11. Verwendung gemäß einem der Ansprüche 7 bis 9,
**dadurch gekennzeichnet,**
**dass** die Rohrleitung mehrschichtig aufgebaut ist, wobei die innerste Schicht aus der genannten Formmasse besteht.

12. Verwendung gemäß einem der Ansprüche 7 bis 11,
**dadurch gekennzeichnet,**
**dass** die Rohrleitung in Teilbereichen oder komplett gewellt ist.

13. Verwendung gemäß einem der Ansprüche 7 bis 12,
**dadurch gekennzeichnet,**
**dass** das Polyamid ein PA 612 ist.

## Claims

1. A piping selected from the group consisting of a line for windscreen-washer systems and a line for headlamp-washer systems,
where, at least in the inner region of the wall, the piping comprises a moulding composition which substantively comprises the following constituents:
I. from 40 to 80 parts by weight of a polyamide and
II. from 60 to 20 parts by weight of an elastic polymer selected from the group consisting of
- ethylene-C₃-C₁₂-α-olefin copolymers having from 20" to 96% by weight of ethylene;
- ethylene-C₃-C₁₂-α-olefin-unconjugated diene terpolymers having from 20 to 85% by weight of ethylene and at most about 10% by weight of an unconjugated diene;
- ethylene-acrylate copolymers having from 50 to 94% by weight of ethylene and from 6 to 50% by weight of an acrylate of the formula 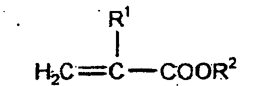 where
R¹ = H or C₁-C₁₂-alkyl and
R² = C₁-C₁₂-alkyl or an alkyl group which bears an epoxy group,
and from zero to 44% by weight of other comonomers;
- styrene/ethylene-butene/styrene block copolymers (SEBS),
- polyalkenylenes and
- LDPE (high-pressure polyethylene);
where the parts by weight of I. and II. give a total of 100 and where the moulding composition comprises at most 2% by weight of ethanol-extractable fractions.

2. A piping according to claim 1,
**characterized in that**
the elastic polymer contains functional groups which permit linkage to the polyamide.

3. A piping according to either of claims 1 and 2,
**characterized in that**
the polyamide is a PA 612.

4. Use, for conveying aqueous, aqueous-alcoholic or purely alcoholic liquids, of a piping which, at least in the inner region of the wall, comprises a moulding composition which substantively comprises the following constituents:
I. from 40 to 80 parts by weight of a polyamide and
II. from 60 to 20 parts by weight of an elastic polymer selected from the group consisting of
- ethylene-C₃-C₁₂-α-olefin copolymers having from 20 to 96% by weight of ethylene;
- ethylene-C₃-C₁₂-α-olefin-unconjugated diene terpolymers having from 20 to 85% by weight of ethylene and at most about 10% by weight of an unconjugated diene;
- ethylene-acrylate copolymers having from 50 to 94% by weight of ethylene and from 6 to 50% by weight of an acrylate of the formula 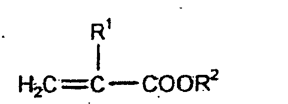 where
R¹ = H or C₁-C₂₂-alkyl and
R² = C₁-C₁₂-alkyl or an alkyl group which bears an epoxy group,
and from zero to 44% by weight of other comonomers;
- styrene/ethylene-butene/styrene block copolymers (SEBS),
- polyalkenylenes and
- LDPE (high-pressure polyethylene);
where the parts by weight of I. and II. give a total of 100 and where the moulding composition comprises at most 2% by weight of ethanol-extractable fractions.

5. Use according to claim 4,
**characterized in that**
the elastic polymer contains functional groups which permit linkage to the polyamide.

6. Use according to either of claims 4 and 5,
**characterized in that**
the polyamide is a PA 612.

7. Use, for producing a line for windscreen-washer systems or a line for headlamp-washer systems, of a moulding composition which substantively comprises the following constituents:
I. from 40 to 80 parts by weight of a polyamide and
II. from 60 to 20 parts by weight of an elastic polymer selected from the group consisting of
- ethylene-C₃-C₁₂-α-olefin copolymers having from 20 to 96% by weight of ethylene;
- ethylene-C₃-C₁₂-α-olefin-unconjugated diene terpolymers having from 20 to 85% by weight of ethylene and at most about 10% by weight of an unconjugated diene;
- ethylene-acrylate copolymers having from 50 to 94% by weight of ethylene and from 6 to 50% by weight of an acrylate of the formula 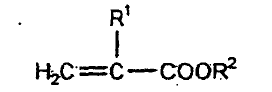 where
R¹ = H or C₁-C₁₂-alkyl and
R² = C₁-C₁₂-alkyl or an alkyl group which bears an epoxy group,
and from zero to 44% by weight of other comonomers;
- styrene/ethylene-butene/styrene block copolymers (SEBS),
- polyalkenylenes and
- LDPE (high-pressure polyethylene);
where the parts by weight of I. and II. give a total of 100 and where the moulding composition comprises at most 2% by weight of ethanol-extractable fractions.

8. Use according to claim 7,
**characterized in that**
the moulding composition substantively comprises
I. from 40 to 70 parts by weight of a polyamide and
II. from 60 to 30 parts by weight of an elastic polymer.

9. Use according to either of claims 7 and 8,
**characterized in that**
the elastic polymer contains functional groups which permit linkage to the polyamide.

10. Use according to any one of claims 7 to 9,
**characterized in that**
the piping has a single-layer structure.

11. Use according to any one of claims 7 to 9,
**characterized in that**
the piping has a multilayer structure, where the innermost layer comprises the moulding composition mentioned.

12. Use according to any one of claims 7 to 11,
**characterized in that**
the piping has corrugation in some regions or throughout.

13. Use according to any one of claims 7 to 12,
**characterized in that**
the polyamide is a PA 612.

## Revendications

1. Conduite, choisie dans le groupe des canalisations pour installations de lave-glaces et des canalisations pour systèmes de lave-phares,
où la conduite est, tout au moins dans sa zone intérieure de paroi, constituée d'une masse de moulage contenant essentiellement les constituants suivants:
I. de 40 à 80 parties en poids d'un polyamide et
II. de 60 à 20 parties en poids d'un polymère élastique, choisi dans le groupe:
- des copolymères d'éthylène/α-oléfines en C₃ à C₁₂ avec de 20 à 96 % en poids d'éthylène,
- des terpolymères d'éthylène/α-oléfines en C₃ à C₁₂/diène non conjugué avec de 20 à 85 % en poids d'éthylène et jusqu'à maximum environ 10 % en poids d'un diène non conjugué,
- des copolymères d'éthylène/acrylate avec de 50 à 94 % en poids d'éthylène, de 6 à 50 % en poids d'un acrylate de formule 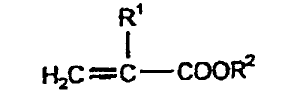 dans laquelle R¹ représente un atome d'hydrogène ou un radical alkyle en C₁ à C₁₂, et
R² représente un radical alkyle en C₁ à C₁₂, ou un radical alkyle portant un groupe époxyde, ainsi que
de 0 à 44 % en poids d'autres comonomères,
- des copolymères blocs de styrène - éthylène/butène - styrène (SEBS),
- des polyalcénylènes, et
- du LDPE (polyéthylène haute pression),
les parties en poids de I. et II. totalisant 100, et la masse de moulage contenant au maximum 2 % en poids de fractions extractibles par l'éthanol.

2. Conduite selon la revendication 1,
**caractérisée en ce que**
le polymère élastique contient des groupes fonctionnels permettant une liaison au polyamide.

3. Conduite selon l'une quelconque des revendications 1 et 2,
**caractérisée en ce que**
le polyamide est du PA 612.

4. Utilisation d'une conduite constituée, tout au moins dans sa zone intérieure de paroi, d'une masse de moulage contenant essentiellement les constituants suivants:
I. de 40 à 80 parties en poids d'un polyamide et
II. de 60 à 20 parties en poids d'un polymère élastique, choisi dans le groupe:
- des copolymères d'éthylène/α-oléfines en C₃ à C₁₂ avec de 20 à 96 % en poids d'éthylène,
- des terpolymères d'éthylène/α-oléfines en C₃ à C₁₂/diène non conjugué avec de 20 à 85 % en poids d'éthylène et maximum environ 10 % en poids d'un diène non conjugué,
- des copolymères d'éthylène/acrylate avec de 50 à 94 % en poids d'éthylène, de 6 à 50 % en poids d'un acrylate de formule 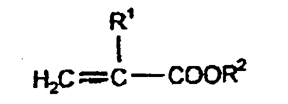 dans laquelle R¹ représente un atome d'hydrogène ou un radical alkyle en C₁ à C₁₂, et
R² représente un radical alkyle en C₁ à C₁₂, ou un radical alkyle portant un groupe époxyde, ainsi que
de 0 à 44 % en poids d'autres comonomères,
- des copolymères blocs de styrène - éthylène/butène - styrène (SEBS),
- des polyalcénylènes, et
- du LDPE (polyéthylène haute pression),
les parties en poids de I. et II. totalisant 100, et la masse de moulage contenant au maximum 2 % en poids de fractions extractibles par l'éthanol, pour le transport de liquides aqueux, aqueux - alcooliques ou purement alcooliques.

5. Utilisation selon la revendication 4,
**caractérisée en ce que**
le polymère élastique contient des groupes fonctionnels permettant une liaison au polyamide.

6. Utilisation selon l'une quelconque des revendications 4 et 5,
**caractérisée en ce que**
le polyamide est un PA 612.

7. Utilisation d'une masse de moulage, contenant essentiellement les constituants suivants:
I. de 40 à 80 parties en poids d'un polyamide et
II. de 60 à 20 parties en poids d'un polymère élastique, choisi dans le groupe:
- des copolymères d'éthylène/α-oléfines en C₃ à C₁₂ avec de 20 à 96 % en poids d'éthylène,
- des terpolymères d'éthylène/α-oléfines en C₃ à C₁₂/diène non conjugué avec de 20 à 85 % en poids d'éthylène et maximum environ 10 % en poids d'un diène non conjugué,
- des copolymères d'éthylène/acrylate avec de 50 à 94 % en poids d'éthylène, de 6 à 50 % en poids d'un acrylate de formule 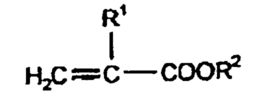 dans laquelle R¹ représente un atome d'hydrogène ou un radical alkyle en C₁ à C₁₂, et
R² représente un radical alkyle en C₁ à C₁₂, ou un radical alkyle portant un groupe époxyde, ainsi que
de 0 à 44 % en poids d'autres comonomères,
- des copolymères blocs de styrène - éthylène/butène - styrène (SEBS),
- des polyalcénylènes, et
- du LDPE (polyéthylène haute pression),
les parties en poids de I. et II. totalisant 100, et la masse de moulage contenant au maximum 2 % en poids de fractions extractibles par l'éthanol, pour la fabrication d'une conduite pour installations de lave-glaces ou d'une conduite pour systèmes de lave-phares.

8. Utilisation selon la revendication 7,
**caractérisée en ce que**
la masse de moulage contient essentiellement
I. de 40 à 70 parties en poids d'un polyamide et
II. de 60 à 30 parties en poids d'un polymère élastique.

9. Utilisation selon l'une quelconque des revendications 7 et 8,
**caractérisée en ce que**
le polymère élastique contient des groupes fonctionnels permettant une liaison au polyamide.

10. Utilisation selon l'une quelconque des revendications 7 à 9,
**caractérisée en ce que**
la conduite est réalisée en une seule couche.

11. Utilisation selon l'une quelconque des revendications 7 à 9,
**caractérisée en ce que**
la conduite est réalisée en plusieurs couches, la couche la plus intérieure étant constituée de la masse moulage mentionnée.

12. Utilisation selon l'une quelconque des revendications 7 à 11,
**caractérisée en ce que**
la conduite est partiellement ou totalement ondulée.

13. Utilisation selon l'une quelconque des revendications 7 à 12,
**caractérisée en ce que**
le polyamide est un PA 612.
